(19)

Europäisches
Patentamt
European
Patent Office
Office européen
des brevets

(11)     **EP 3 907 664 A1**

(12)                                    **EUROPEAN PATENT APPLICATION**

(43) Date of publication:
**10.11.2021   Bulletin 2021/45**

(51) Int Cl.:
*G06N 3/04* (2006.01)          *G06N 3/08* (2006.01)

(21) Application number: **20217352.2**

(22) Date of filing: **28.12.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.05.2020   CN 202010390180**

(71) Applicant: **BEIJING BAIDU NETCOM SCIENCE
AND
TECHNOLOGY CO. LTD.
100085 Beijing (CN)**

(72) Inventors:
• **WANG, Jianfei
  Beijing, 100085 (CN)**
• **PENG, Cheng
  Beijing, 100085 (CN)**
• **LUO, Xuefeng
  Beijing, 100085 (CN)**
• **WANG, Weiwei
  Beijing, 100085 (CN)**

(74) Representative: **Maiwald Patent- und
Rechtsanwaltsgesellschaft mbH
Elisenhof
Elisenstraße 3
80335 München (DE)**

(54)     **PROCESSING METHOD AND APPARATUS OF CAPSULE NETWORK MODEL**

(57)     The disclosure provides a processing method and an apparatus of a neural network model, and relates to a field of computer technologies. The method includes: obtaining and converting input data of the $i^{th}$ processing layer into a plurality of capsule nodes; performing affine transformation on the plurality of the capsule nodes to generate a plurality of affine nodes; determining an initial activation input value according to the plurality of the affine nodes, and inputting the initial activation input value into an activation function to generate an initial activation output value; re-determining the initial activation input value according to an affine node corresponding to the initial activation output value, and inputting the re-determined initial activation input value into the activation function to regenerate the initial activation output value; repeating the acts for a preset number of times to determine the latest initial activation output value as an activation output value.

EP 3 907 664 A1

**Description**

<u>**TECHNICAL FIELD**</u>

The disclosure relates to a field of artificial intelligence technologies in a field of computer technologies, and more particular to, a processing method and apparatus of a neural network model.

<u>**BACKGROUND**</u>

Capsule network proposes a new modeling idea for a neural network. Compared with other neural networks, the capsule network enhances overall description capability of the network by increasing an expression capability of each neuron node in the network. In detail, an original scalar neuron is converted into a vector neuron. Generally, activation functions such as sigmoid and relu are adopted for scalar neuronal nodes. The activation functions are key elements in the design of neural network, which are mainly used to introduce a capability of non-linear changing in the neural network to help the neural network to realize a non-linear logical reasoning capability.

Since direction information is introduced into a capsule node, the neuron is expanded into a vector representation, thus the activation functions for the scalar neuron are not applicable. Therefore, the capsule network provides a new activation function Squash to solve this problem. However, in practical applications, the Squash activation function has a technical problem of insufficient activation state sparsity and a technical problem that when the activation state corresponds to a high value, the updating speed is low, which leads to the disadvantage of low performance in the existing neural network.

<u>**SUMMARY**</u>

Embodiments of the disclosure provide a processing method and apparatus of a neural network model, an electronic device and a storage medium.

In a first aspect, embodiments of the disclosure provide a processing method of a neural network model, the neural network model includes N processing layers, N is a positive integer, and the method includes : obtaining input data of the $i^{th}$ processing layer and converting the input data into a plurality of capsule nodes, wherein the input data comprises a plurality of neuron vectors in j dimensions, and i and j are positive integers less than or equal to N; performing affine transformation on the plurality of the capsule nodes to generate a plurality of affine nodes corresponding to the plurality of the capsule nodes; determining an initial activation input value of the $i^{th}$ processing layer according to the plurality of the affine nodes corresponding to the plurality of the capsule nodes; inputting the initial activation input value of the $i^{th}$ processing layer into an activation function to generate an initial activation output value of the $i^{th}$ processing layer; and re-determining the initial activation input value of the $i^{th}$ processing layer according to an affine node corresponding to the initial activation output value, inputting the re-determined initial activation input value of the $i^{th}$ processing layer into the activation function to regenerate the initial activation output value of the $i^{th}$ processing layer, and repeating acts of re-determining and inputting for a preset number of times to determine the latest initial activation output value of the $i^{th}$ processing layer as an activation output value of the $i^{th}$ processing layer.

In some embodiments, determining the initial activation input value comprises: performing a weighted summation on the plurality of the affine nodes corresponding to the plurality of the capsule nodes according to initial weights to generate the initial activation input value of the $i^{th}$ processing layer.

In some embodiments, inputting the initial activation input value of the $i^{th}$ processing layer into the activation function comprises: determining a modulus length corresponding to the initial activation input value; generating a first output value according to the modulus length corresponding to the initial activation input value and a first activation threshold; generating a second output value according to the first output value and a second activation threshold, wherein the second activation threshold is greater than the first activation threshold; and generating the initial activation output value according to the second output value and the modulus length corresponding to the initial activation input value.

In some embodiments, generating the first output value according to the modulus length corresponding to the initial activation input value and the first activation threshold comprises: calculating a difference between the modulus length corresponding to the initial activation input value and the first activation threshold and determining a product of the difference and a preset slope as the first output value, when the modulus length corresponding to the initial activation input value is greater than the first activation threshold, wherein the preset slope is a reciprocal of a difference between 1 and the first activation threshold; and determining the first output value as zero when the modulus length corresponding to the initial activation input value is less than the first activation threshold.

In some embodiments, generating the second output value according to the first output value and the second activation threshold comprises: determining the second activation threshold as the second output value when the first output value is greater than the second activation threshold; and determining the first output value as the second output value when the first output value is less than the second activation threshold.

In some embodiments, the initial activation output value is generated by the following formula:

$$h = g * \frac{d}{\|d\|},$$

where h is the initial activation output value, g is the second output value, d is the initial activation input value, and $\|d\|$ is the modulus length corresponding to the initial activation input value.

In some embodiments, re-determining the initial activation input value, inputting the re-determined initial activation input value into the activation function, and repeating acts of re-determining and inputting for the preset number of times comprises: updating the initial weights according to the initial activation output value, and regenerating the initial activation input value of the $i^{th}$ processing layer according to the updated initial weights, and inputting the re-generated initial activation input value of the $i^{th}$ processing layer into the activation function to regenerate the initial activation output value of the $i^{th}$ processing layer, wherein the acts of updating, regenerating and inputting are repeated for the preset number of times, and the latest initial activation output value of the $i^{th}$ processing layer is determined as the activation output value of the $i^{th}$ processing layer.

In a second aspect, embodiments of the disclosure provide a processing apparatus of a neural network model, the neural network model includes N processing layers, N is a positive integer, and the apparatus includes: an obtaining module, a first generating module, a determining module, a second generating module and a third generating module.

The obtaining module is configured to obtain input data of the $i^{th}$ processing layer and convert the input data into a plurality of capsule nodes, in which the input data includes a plurality of neuron vectors in j dimensions, and i and j are positive integers less than or equal to N.

The first generating module is configured to perform affine transformation on the plurality of the capsule nodes to generate a plurality of affine nodes corresponding to the plurality of the capsule nodes.

The determining module is configured to determine an initial activation input value of the $i^{th}$ processing layer according to the plurality of the affine nodes corresponding to the plurality of the capsule nodes.

The second generating module is configured to input the initial activation input value of the $i^{th}$ processing layer into an activation function to generate an initial activation output value of the $i^{th}$ processing layer.

The third generating module is configured to re-determine the initial activation input value of the $i^{th}$ processing layer according to an affine node corresponding to the initial activation output value, and input the re-determined initial activation input value of the $i^{th}$ processing layer into the activation function to regenerate the initial activation output value of the $i^{th}$ processing layer, in which the third generating module is configured to repeatedly perform its functionalities for a preset number of times, and determine the latest initial activation output value of the $i^{th}$ processing layer as an activation output value of the $i^{th}$ processing layer.

In some embodiments, the determining module comprises: a first generating unit, configured to perform a weighted summation on the plurality of the affine nodes corresponding to the plurality of the capsule nodes according to initial weights to generate the initial activation input value of the $i^{th}$ processing layer.

In some embodiments, the second generating module comprises: a first determining unit, configured to determine a modulus length corresponding to the initial activation input value; a second generating unit, configured to generate a first output value according to the modulus length corresponding to the initial activation input value and a first activation threshold; a third generating unit, configured to generate a second output value according to the first output value and a second activation threshold, wherein the second activation threshold is greater than the first activation threshold; and a fourth generating unit, configured to generate the initial activation output value according to the second output value and the modulus length corresponding to an affine node of a target capsule node.

In some embodiments, the second generating unit is further configured to: calculate a difference between the modulus length corresponding to the initial activation input value and the first activation threshold and determine a product of the difference and a preset slope as the first output value, when the modulus length corresponding to the initial activation input value is greater than the first activation threshold, wherein the preset slope is a reciprocal of a difference between 1 and the first activation threshold; and determine the first output value as zero when the modulus length corresponding to the initial activation input value is less than the first activation threshold.

In some embodiments, the third generating unit is further configured to: determine the second activation threshold as the second output value when the first output value is greater than the second activation threshold; and determine the first output value as the second output value when the first output value is less than the second activation threshold.

In a third aspect, embodiments of the disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement the method according to embodiments of the first aspect of the disclosure.

In a fourth aspect, embodiments of the disclosure provide a non-transitory computer-readable storage medium storing computer instructions. When the instructions are executed, the computer is caused to implement the method according to embodiments of the first aspect of the disclosure.

In a fifth aspect, embodiments of the disclosure provide a computer program product comprising computer instructions. When the instructions are executed, the computer is caused to implement the method according to embodiments of the first aspect of the disclosure.

It should be understood that the content described in this section is not intended to identify the key or important features of the embodiments of the disclosure, nor is it intended to limit the scope of the disclosure. Additional features of the disclosure will be easily understood by the following description.

## BRIEF DESCRIPTION OF THE DRAWINGS

The drawings are used to better understand the solution and do not constitute a limitation to the disclosure, in which:

FIG. 1 is a flowchart of a processing method of a neural network model according to Embodiment 1 of the disclosure.
FIG. 2 is a flowchart of a processing method of a neural network model according to Embodiment 2 of the disclosure.
FIG. 3 is a diagram showing an effect of an existing activation function according to an embodiment of the disclosure.
FIG. 4 is a diagram showing an effect of Ruler activation function according to an embodiment of the disclosure.
FIG. 5 is a schematic diagram of a processing apparatus of a neural network model according to Embodiment 3 of the disclosure.
FIG. 6 is a block diagram of an electronic device used to implement the processing method of the neural network model according to an embodiment of the disclosure.

## DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

In the related art, an activation function used in processing of a neural network model is called Squash activation function, and its expression is:

$$V_j = \frac{\|S_j\|^2}{1+\|S_j\|^2} \frac{S_j}{\|S_j\|},$$

where subscript j represents the $j^{th}$ vector node. $S_j$ represents a vector value before activation of the $j^{th}$ vector node, and $V_j$ represents a vector value after the activation of the $j^{th}$ vector node. $\|\vec{x}\|^p$ represents a p-order norm of the vector $\vec{x}$.

Based on the above formula of the Squash activation function, a modulus length $N_j$ in a Squash activation state

$$N_j = \frac{\|S_j\|^2}{1+\|S_j\|^2}.$$

mainly depends on the left half on the right side of the above formula, namely Since $\|S_j\|^2 \geq 0$, it is concluded that $N_j \geq 0$, which leads to a technical problem of insufficient sparsity in the Squash activation function.

For the modulus length $N_j$ of the Squash activation state, the derivative $\frac{\partial N_j}{\partial x} = \frac{1}{(1+x)^2}$ is obtained with respect to a variable $x = \|S_j\|^2$. Based on the formula, it is known that a gradient decreases with the reciprocal of the square of x. When x is greater than 0.8, the derivative is $\frac{\partial N_j}{\partial x} < 0.3$, which also leads to a technical problem that when the activation state corresponds to a high value, the updating speed is low.

In the processing of the neural network model in the related art, the activation function has a disadvantage of insufficient sparsity and a disadvantage that when the activation state corresponds to a high value, the updating speed is low, resulting in a technical problem of low performance of the neural network. This disclosure provides a processing method of a neural network model. The input data of the $i^{th}$ processing layer is obtained and converted into a plurality of capsule nodes. Affine transformation is performed on the plurality of the capsule nodes to generate a plurality of affine nodes corresponding to the plurality of the capsule nodes. An initial activation input value of the $i^{th}$ processing layer is determined according to the plurality of the affine nodes corresponding to the plurality of the capsule nodes. The initial activation input value of the $i^{th}$ processing layer is input into an activation function to generate an initial activation output value of the $i^{th}$ processing layer. The initial activation input value of the $i^{th}$ processing layer is re-determined according to an affine node corresponding to the initial activation output value, and the re-determined initial activation input value of the $i^{th}$ processing layer is input into the activation function to regenerate the initial activation output value of the $i^{th}$ processing layer. The step of re-determining and subsequent steps are repeated for a preset number of times, and the latest initial activation output value of the $i^{th}$ processing layer is determined as an activation output value of the $i^{th}$ processing layer.

A processing method and apparatus of a neural network model, an electronic device, and a storage medium of the embodiments of the disclosure are described below with reference to the accompanying drawings.

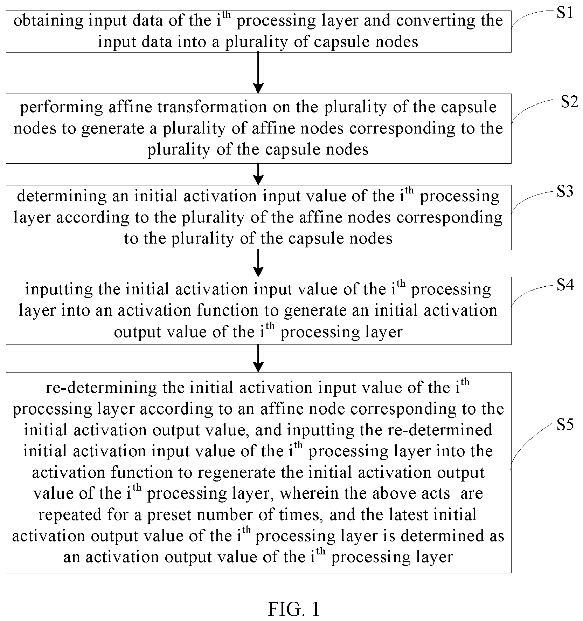

FIG. 1 is a flowchart of a processing method of a neural network model according to Embodiment 1 of the disclosure.

For example, in the embodiment of the disclosure, the processing method of the neural network model is configured in the processing apparatus of the neural network model. The processing apparatus of the neural network model is applicable to any electronic device, so that the electronic device is capable of executing the function of processing the neural network model.

The electronic device may be a personal computer (PC), a cloud device, or a mobile device. The mobile device may be, for example, a mobile phone, a tablet computer, a personal digital assistant, a wearable device, and other hardware devices with various operating systems.

As illustrated in FIG. 1, the processing method of the neural network model includes the followings.

At block S1, input data of the $i^{th}$ processing layer is obtained and the input data is converted into a plurality of capsule nodes.

The input data includes a plurality of neuron vectors in j dimensions, and i and j are positive integers less than or equal to N.

In the embodiment of the disclosure, the neural network model may include N processing layers, and N is a positive integer. The neural network includes an input layer, a hidden layer and an output layer. The neural network may also be a capsule network. The capsule network also includes N processing layers, and N is a positive integer.

In the embodiment of the disclosure, after obtaining the input data of the $i^{th}$ processing layer of the neural network, the input data is converted into the plurality of capsule nodes. The $i^{th}$ processing layer may be any one of the input layer, the hidden layer, and the output layer.

For example, the obtained input data is a=[1, 2, 3, 4, 5, 6], which represents 6 neurons. Assuming that the neuron vector is a 2-dimensional vector, the obtained input data a can be converted into b=[[1,2], [3, 4], [5, 6]] which contains a plurality of capsule nodes, where [1, 2], [3, 4] and [5, 6] each represents one capsule node.

At block S2, affine transformation is performed on the plurality of the capsule nodes to generate a plurality of affine nodes corresponding to the plurality of the capsule nodes.

Affine transformation is an important transformation in a two-dimensional plane, which is geometrically defined as an affine transformation or affine mapping between two vector spaces, and is composed of a non-singular linear transformation followed by a translation transformation.

In the embodiment of the disclosure, after the input data is converted into the plurality of capsule nodes, affine transformation is performed on the plurality of the capsule nodes to generate the affine nodes corresponding to the plurality of the capsule nodes. Thus, by learning a feature abstraction capability of vectors, an aggregation between similar feature nodes is realized.

The following example illustrates the process of performing affine transformation on the plurality of the capsule nodes. For example, the dimensions of the plurality of the capsule nodes in the above example are all 2, M=[[0, 1], [1, 0]]. After aggregation, a new representation of each capsule node is generated as the affine node c=b*M, where "*" means matrix multiplication, and finally a plurality of affine nodes c=[[2,1], [4, 3], [6, 5]] corresponding to the plurality of the capsule nodes are obtained.

At block S3, an initial activation input value of the $i^{th}$ processing layer is determined according to the plurality of the affine nodes corresponding to the plurality of the capsule nodes.

In the embodiment of the disclosure, after the plurality of affine nodes corresponding to the plurality of capsule nodes are generated by performing the affine transformation on the plurality of the capsule nodes, a weighted summation is performed on the plurality of affine nodes according to initial weights to obtain a result. The result is used as the initial activation input value of the $i^{th}$ processing layer. Therefore, according to the initial weights, the initial activation input value of the $i^{th}$ processing layer is determined, which improves an accuracy of determining the initial activation input value.

Referring to the above example, the weighted summation is performed on the affine nodes c based on an initial weights w to obtain the result d, that is, $d=\sum c \cdot w$, where $w=[0.33,0.33,0.33]$, $c= [[2,1],[4,3],[6,5]]$, so that the final result is $d=[4,3]$. Further, the initial activation input value of the $i^{th}$ processing layer may be determined based on the result.

At block S4, the initial activation input value of the $i^{th}$ processing layer is input into an activation function to generate an initial activation output value of the $i^{th}$ processing layer.

In the embodiment of the disclosure, after the initial activation input value of the $i^{th}$ processing layer is obtained by performing the weighted summation on the plurality of the affine nodes corresponding to the plurality of the capsule nodes, the initial activation input value is input into the activation function to obtain the initial activation output value of the $i^{th}$ processing layer output by the activation function.

It is noted that if the activation function is not used in the processing of the neural network model, the output of each layer is a linear function of the input of the previous layer, and no matter how many layers the neural network has, the output is a linear combination of the inputs. If the activation function is used in the processing of the neural network model, the activation function introduces a nonlinear factor to the neuron, so that the neural network approaches any nonlinear function, and the neural network is applicable to many nonlinear models.

The activation function in the embodiment of the disclosure is a new activation function Ruler for the capsule network, which is different from the existing Squash activation function. Therefore, in the processing of the neural network model, it is avoided to use the Squash activation function that has the technical problem of insufficient activation state sparsity and the problem that when the activation state corresponds to a high value, the updating speed is low, which leads to the disadvantage of low performance in the existing neural network.

At block S5, the initial activation input value of the $i^{th}$ processing layer is re-determined according to an affine node corresponding to the initial activation output value, and the re-determined initial activation input value of the $i^{th}$ processing layer is input into the activation function to regenerate the initial activation output value of the $i^{th}$ processing layer. S5 is repeated for a preset number of times, and the latest initial activation output value of the $i^{th}$ processing layer is determined as an activation output value of the $i^{th}$ processing layer.

In the embodiment of the disclosure, the initial activation input value of the $i^{th}$ processing layer is input into the activation function, and after the initial activation output value of the $i^{th}$ processing layer is generated, the weighted summation is performed on the initial activation output value according to the initial weights to regenerate the initial activation input value of the $i^{th}$ processing layer. The regenerated initial activation input value of the $i^{th}$ processing layer is input into the activation function to obtain a new initial activation output value. The above process is iteratively repeated for the preset number, and the latest output value of the activation function is used as the activation output value of the $i^{th}$ processing layer. The preset number is set according to actual conditions, which may be 1 or 3, and the number is not limited herein.

The processing method of a neural network model according to embodiment of the disclosure includes: S1, obtaining input data of the $i^{th}$ processing layer and converting the input data into a plurality of capsule nodes; S2, performing affine transformation on the plurality of the capsule nodes to generate a plurality of affine nodes corresponding to the plurality of the capsule nodes; S3, determining an initial activation input value of the $i^{th}$ processing layer according to the plurality of the affine nodes corresponding to the plurality of the capsule nodes; S4, inputting the initial activation input value of the $i^{th}$ processing layer into an activation function to generate an initial activation output value of the $i^{th}$ processing layer; and S5, re-determining the initial activation input value of the $i^{th}$ processing layer according to an affine node corresponding to the initial activation output value, and inputting the re-determined initial activation input value of the $i^{th}$ processing layer into the activation function to regenerate the initial activation output value of the $i^{th}$ processing layer. S5 is repeated for a preset number of times, and the latest initial activation output value of the $i^{th}$ processing layer is determined as an activation output value of the $i^{th}$ processing layer. Thus, by performing the affine transformation on the plurality of the capsule nodes converted based on the input data of the neural network, the affine nodes corresponding to the plurality of the capsule nodes are obtained, and then the output value of the activation function is updated iteratively according to the affine nodes to obtain the final activation output value of the neural network model, thereby improving the performance of the neural network.

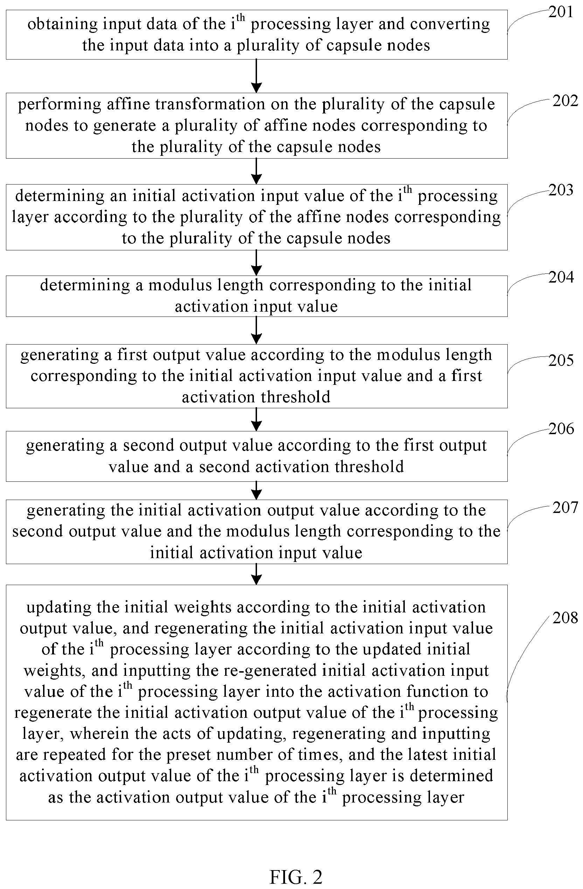

On the basis of the above-mentioned embodiment, at block S4, when the initial activation input value of the $i^{th}$ processing layer is input into the activation function to generate the initial activation output value of the $i^{th}$ processing layer, the initial activation output value of the $i^{th}$ processing layer can be generated according to a modulus length of the initial activation input value, the first activation threshold and the second activation threshold. The specific implementation process is shown in FIG. 2. FIG. 2 is a flowchart of a processing method of a neural network model according to Embodiment 2 of the disclosure.

As illustrated in FIG. 2, the processing method of the neural network model includes the followings.

At block 201, input data of the $i^{th}$ processing layer is obtained and the input data is converted into a plurality of capsule nodes.

At block 202, affine transformation is performed on the plurality of the capsule nodes to generate a plurality of affine nodes corresponding to the plurality of the capsule nodes.

At block 203, an initial activation input value of the $i^{th}$ processing layer is determined according to the plurality of the affine nodes corresponding to the plurality of the capsule nodes.

In the embodiment of the disclosure, with regard to the implementation process from step 201 to step 203, reference can be made to the implementation process from step S1 to step S3 in Embodiment 1, which will not be repeated here.

At block 204, a modulus length corresponding to the initial activation input value is determined.

In the embodiment of the disclosure, after determining the initial activation input value of the $i^{th}$ processing layer according to the affine nodes corresponding to the plurality of the capsule nodes, the modulus length corresponding to the initial activation input value is determined.

It is understood that the initial activation input value is a vector, so a size of the vector is calculated to determine the modulus length corresponding to the initial activation input value.

For example, the modulus length corresponding to the initial activation input value is calculated by the following formula. If the initial activation input value is d=[4,3], the modulus length corresponding to the initial activation input value

$$\|d\| = \sqrt[2]{\sum_i d_i^2},$$

is $\|d\|$, which can be represented as and the direction is $\dfrac{d}{\|d\|}$.

At block 205, a first output value is generated according to the modulus length corresponding to the initial activation input value and a first activation threshold.

The first activation threshold refers to the minimum activation threshold set by the user.

In the embodiment of the disclosure, after determining the modulus length corresponding to the initial activation input value, the modulus length corresponding to the initial activation input value is compared with the first activation threshold to obtain a comparison result, and the first output value is determined according to the comparison result.

In a possible situation, if it is determined that the modulus length corresponding to the initial activation input value is greater than the first activation threshold, a difference between the modulus length corresponding to the initial activation input value and the first activation threshold is calculated, and a product of the difference and a preset slope is determined as the first output value. The preset slope is a reciprocal of a difference between 1 and the first activation threshold.

In another possible situation, it is determined that the modulus length corresponding to the initial activation input value is less than the first activation threshold, the first output value is 0.

For example, suppose that the first activation threshold is β, the modulus length corresponding to the initial activation input value is $\|d\|$, and the maximum value e = max($\|d\|$ - β,0) is selected to be outputted, where β is set by the user. The preset slope k=1/(1 - β) By multiplying the maximum value between the difference between the modulus length corresponding to the initial activation input value and the first activation threshold and 0 by the slope k, the first output value f=k · e of the activation function is obtained.

It can be seen that when the modulus length corresponding to the initial activation input value is less than the first activation threshold, the value of e is 0. In this case, the value of the first output value f=k·e is also 0.

Thus, by recalculating the slope according to the preset first activation threshold, it is ensured that when the output value of the activation function is 1, the input value is also 1, so that a learning rate is not affected when an activation window is shortened.

At block 206, a second output value is generated according to the first output value and a second activation threshold.

The second activation threshold is greater than the first activation threshold, and the first activation threshold may be set as the minimum activation threshold, and the second activation threshold may be set as the maximum activation threshold.

In the embodiment of the disclosure, after the first output value is determined according to the modulus length corresponding to the initial activation input value and the first activation threshold, further, the second output value is determined according to the magnitude relationship between the first output value and the second activation threshold.

In a possible situation, it is determined that the first output value is greater than the second activation threshold, the second activation threshold is determined as the second output value.

It is understood that the second activation threshold determines the maximum signal value represented by the activation function. If the first output value exceeds this signal value, the output value of the activation function is determined as the second activation threshold. As a result, an influence of a single larger activation value on the overall activation function is reduced.

In a possible situation, if it is determined that the first output value is less than the second activation threshold, the first output value is determined as the second output value.

At block 207, the initial activation output value is generated according to the second output value and the modulus length corresponding to the initial activation input value.

In the embodiment of the disclosure, a ratio of the initial activation input value to the modulus length corresponding to the initial activation input value is calculated, and the result of multiplying the ratio by the second output value is determined as the initial activation output value.

$$h = g * \frac{d}{\|d\|},$$

As a possible situation, the initial activation output value is calculated by the following formula: where h is the initial activation output value, g is the second output value, and d is the initial activation input value, $\|d\|$ is the modulus length corresponding to the initial activation input value.

At block 208, the initial weights are updated according to the initial activation output value, and the initial activation input value of the $i^{th}$ processing layer is regenerated according to the updated initial weights, and the regenerated initial activation input value of the $i^{th}$ processing layer is input into the activation function to regenerate the initial activation output value of the $i^{th}$ processing layer, in which the acts of updating, regenerating and inputting are repeated for the preset number of times, and the activation output value of the $i^{th}$ processing layer is generated.

In the embodiment of the disclosure, after the initial activation output value of the activation function is determined, the initial weights are updated according to the initial activation output value. As a possible implementation, the product of the initial activation output value and the initial activation input value is calculated, and the updated weights are obtained by adding the product of the initial activation output value and the initial activation input value to the initial weights, which is expressed by the following formula: w'=w+d*g, where w' refers to the initial weights after the update, w is the initial weights before the update, d is the initial activation input value, and g is the initial activation output value.

It is noted that by multiplying the initial activation input value and the initial activation output value, a similarity between the initial activation input value and the initial activation output value can be reflected according to the result.

In the embodiment of the disclosure, after the initial weights are updated according to the initial activation output value, the weighted summation is performed on the affine nodes corresponding to the plurality of the capsule nodes according to the updated initial weights to regenerate the initial activation input value of the $i^{th}$ processing layer. With regard to the specific implementation process, reference can be made to the implementation process of Embodiment 1, which will not be repeated here.

Further, the regenerated initial activation input value is input into the activation function, and the initial activation output value of the $i^{th}$ processing layer is regenerated, and the process is repeated for the preset number of times, and the latest initial activation output value of the $i^{th}$ processing is determined as the activation output value of the $i^{th}$ processing layer.

The preset number is not limited here, which may be 1 to 3.

The activation function in the disclosure is expressed by the following formula:

$$\text{Ruler} = \min(k * \max(\|x\| - \beta, 0), \alpha) \frac{x}{\|x\|}, k = 1/(1 - \beta)$$

Ruler represents the activation function, $\beta$ is the first activation threshold, $\alpha$ is the second activation threshold, and x is the initial activation input value. First, the derivative of the above formula can be found as:

$$\begin{cases} k, & \|x\| > \beta \text{ and } k * \|x\| < \alpha \\ 0, & \text{others} \end{cases}$$

In the activation interval of $\|x\| > \beta$ and $k * \|x\| < \alpha$, the derivative is a constant value. By setting the parameter $\alpha$ reasonably, for example, when $\alpha = 1$, it is ensured that until the maximum value 1 of the activation state is reached, and the gradient is equal in the activation state between 0 and 1, which effectively solves the problem that when the activation state of activation function of the existing neural network corresponds to a high value, the updating speed is low.

When β>0, it is ensured that the node cannot be activated in a range of (0, β], that is, the state value of the node is 0. Therefore, the sparsity of the activation state is increased, and the technical problem that the existing activation function of the neural network has an effect due to superposition on the results by inactive state is avoided.

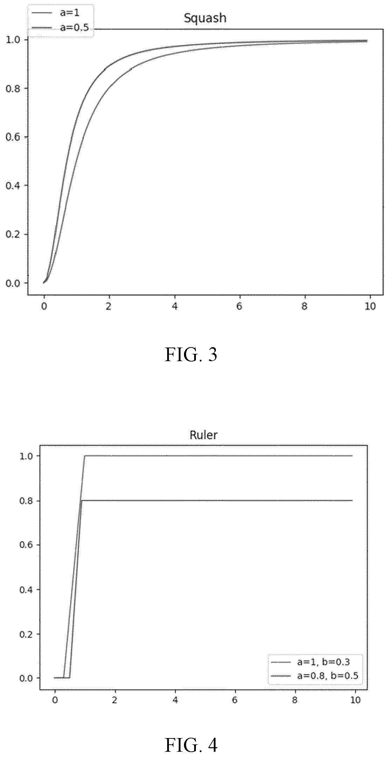

For example, referring to the effect diagrams of the activation functions in FIG. 3 and FIG. 4, it can be seen that in the effect diagram of the existing Squash activation function in FIG. 3, there is the problem that when the activation state corresponds to a high value, the updating speed is low. However, in the effect diagram of the Ruler activation function in the disclosure, the gradient is equal in the activation state between 0 and 1, which effectively solves the above technical problem.

According to the processing method of a neural network model, after determining the initial activation input value of the $i^{th}$ processing layer, a modulus length corresponding to the initial activation input value is determined. The first output value is generated according to the modulus length corresponding to the initial activation input value and a first activation threshold. The second output value is generated according to the first output value and the second activation threshold. The initial activation output value is generated according to the second output value and the modulus length corresponding to the initial activation input value. The initial weights are updated according to the initial activation output value, and the initial activation input value of the $i^{th}$ processing layer is regenerated according to the updated initial weights, and the re-generated initial activation input value of the $i^{th}$ processing layer is input into the activation function to regenerate the initial activation output value of the $i^{th}$ processing layer. The acts of updating, regenerating and inputting are repeated for the preset number of times, to determine the initial activation output value of the $i^{th}$ processing layer. Therefore, after determining the initial activation output value according to the initial activation input value, the initial weights are updated according to the initial activation output value to iteratively update the activation function output value, thereby improving the performance of the neural network.

In order to implement the above embodiments, this disclosure provides a processing apparatus of a neural network model.

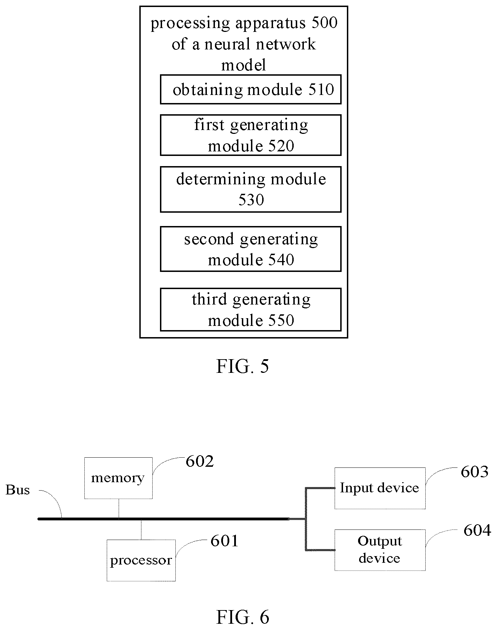

FIG. 5 is a schematic diagram of a processing apparatus of a neural network model according to Embodiment 3 of the disclosure.

As illustrated in FIG. 5, the neural network model includes N processing layers, N is a positive integer. The processing apparatus 500 of the neural network model further may include: an obtaining module 510, a first generating module 520, a determining module 530, a second generating module 540, a third generating module 550.

The obtaining module 510 is configured to obtain input data of the $i^{th}$ processing layer and convert the input data into a plurality of capsule nodes, in which the input data includes a plurality of neuron vectors in j dimensions, and i and j are positive integers less than or equal to N.

The first generating module 520 is configured to perform affine transformation on the plurality of the capsule nodes to generate a plurality of affine nodes corresponding to the plurality of the capsule nodes.

The determining module 530 is configured to determine an initial activation input value of the $i^{th}$ processing layer according to the plurality of the affine nodes corresponding to the plurality of the capsule nodes.

The second generating module 540 is configured to input the initial activation input value of the $i^{th}$ processing layer into an activation function to generate an initial activation output value of the $i^{th}$ processing layer.

The third generating module 550 is configured to re-determine the initial activation input value of the $i^{th}$ processing layer according to an affine node corresponding to the initial activation output value, and input the re-determined initial activation input value of the $i^{th}$ processing layer into the activation function to regenerate the initial activation output value of the $i^{th}$ processing layer. The third generating module is configured to repeatedly perform its functionalities for a preset number of times, and determine the latest initial activation output value of the $i^{th}$ processing layer as an activation output value of the $i^{th}$ processing layer.

As a possible implementation, the determining module 530 includes: a first generating unit.

The first generating unit is configured to perform a weighted summation on the plurality of the affine nodes corresponding to the plurality of the capsule nodes according to initial weights to generate the initial activation input value of the $i^{th}$ processing layer.

As a possible implementation, the second generating module 540 includes: a first determining unit, a second generating unit, a third generating unit and a fourth generating unit.

The first determining unit is configured to determine a modulus length corresponding to the initial activation input value.

The second generating unit is configured to generate a first output value according to the modulus length corresponding to the initial activation input value and a first activation threshold.

The third generating unit is configured to generate a second output value according to the first output value and a second activation threshold, in which the second activation threshold is greater than the first activation threshold.

The fourth generating unit is configured to generate the initial activation output value according to the second output value and the modulus length corresponding to an affine node of a target capsule node.

As a possible implementation, the second generating unit is further configured to: calculate a difference between the modulus length corresponding to the initial activation input value and the first activation threshold and determine a product of the difference and a preset slope as the first output value, when the modulus length corresponding to the initial activation input value is greater than the first activation threshold, in which the preset slope is a reciprocal of a difference between 1 and the first activation threshold; and determine the first output value as zero when the modulus length corresponding to the initial activation input value is less than the first activation threshold.

As a possible implementation, the third generating unit is further configured to: determine the second activation threshold as the second output value when the first output value is greater than the second activation threshold; and determine the first output value as the second output value when the first output value is less than the second activation threshold.

As a possible implementation, the initial activation output value is generated by the following formula:

$$h = g * \frac{d}{\|d\|}$$

where h is the initial activation output value, g is the second output value, d is the initial activation input value, and $\|d\|$ is the modulus length corresponding to the initial activation input value.

As a possible implementation, the third generating module 550 is further configured to: update the initial weights according to the initial activation output value, and regenerate the initial activation input value of the $i^{th}$ processing layer according to the updated initial weights, and input the re-generated initial activation input value of the $i^{th}$ processing layer into the activation function to regenerate the initial activation output value of the $i^{th}$ processing layer, in which the acts of updating, regenerating and inputting are repeated for the preset number of times, and the latest initial activation output value of the $i^{th}$ processing layer is determined as the activation output value of the $i^{th}$ processing layer.

According to the processing apparatus of the neural network model, input data of the $i^{th}$ processing layer is obtained and the input data is converted into a plurality of capsule nodes. Affine transformation is performed on the plurality of the capsule nodes to generate a plurality of affine nodes corresponding to the plurality of the capsule nodes. An initial activation input value of the $i^{th}$ processing layer is determined according to the plurality of the affine nodes corresponding to the plurality of the capsule nodes. The initial activation input value of the $i^{th}$ processing layer is input into an activation function to generate an initial activation output value of the $i^{th}$ processing layer. The initial activation input value of the $i^{th}$ processing layer is re-determined according to an affine node corresponding to the initial activation output value, and the re-determined initial activation input value of the $i^{th}$ processing layer is input into the activation function to regenerate the initial activation output value of the $i^{th}$ processing layer. The step of re-determining and subsequent steps are repeated for a preset number of times, and the latest initial activation output value of the $i^{th}$ processing layer is determined as an activation output value of the $i^{th}$ processing layer. Thus, the affine nodes corresponding to the plurality of capsule nodes are obtained by performing the affine transformation on the plurality of the capsule nodes converted based on the input data of the neural network model, the output value of the activation function is iteratively updated to obtain the final activation output value of the neural network model, thereby improving performance of the neural network.

According to the embodiments of the present disclosure, the disclosure also provides an electronic device and a readable storage medium.

FIG. 6 is a block diagram of an electronic device for implementing the processing method of the neural network model according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the obtaining module 510, the first generating module 520, the determining module 530, the second generating module 540, and the third generating module 550 shown in FIG. 5) corresponding to the method in the embodiment of the present disclosure. The processor 601 executes various functional applications and data processing of the server by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

According to the technical solution of the embodiment of the disclosure, the affine nodes corresponding to the plurality of the capsule nodes are obtained by performing the affine transformation on the plurality of the capsule nodes converted based on the input data of the neural network model, and then the output value of the activation function is updated according to the affine nodes iteratively to obtain the final activation output value of the neural network model, thereby improving the performance of the neural network.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the present disclosure. Those skilled in the art should understand that various modifications, combinations, sub-combinations and substitutions can be made according to design requirements and other factors.

**Claims**

1. A processing method of a neural network model, wherein the neural network model comprises N processing layers, N is a positive integer, and the method comprises:

    obtaining (S1, 201) input data of the $i^{th}$ processing layer and converting the input data into a plurality of capsule nodes, wherein the input data comprises a plurality of neuron vectors in j dimensions, and i and j are positive integers less than or equal to N;
    performing (S2, 202) affine transformation on the plurality of the capsule nodes to generate a plurality of affine nodes corresponding to the plurality of the capsule nodes;
    determining (S3, 203) an initial activation input value of the $i^{th}$ processing layer according to the plurality of the affine nodes corresponding to the plurality of the capsule nodes;
    inputting (S4) the initial activation input value of the $i^{th}$ processing layer into an activation function to generate an initial activation output value of the $i^{th}$ processing layer; and
    re-determining (S5) the initial activation input value of the $i^{th}$ processing layer according to an affine node corresponding to the initial activation output value, inputting the re-determined initial activation input value of the $i^{th}$ processing layer into the activation function to regenerate the initial activation output value of the $i^{th}$ processing layer, and repeating acts of re-determining and inputting for a preset number of times to determine the latest initial activation output value of the $i^{th}$ processing layer as an activation output value of the $i^{th}$ processing layer.

2. The method according to claim 1, wherein determining (S3, 203) the initial activation input value comprises:
    performing a weighted summation on the plurality of the affine nodes corresponding to the plurality of the capsule nodes according to initial weights to generate the initial activation input value of the $i^{th}$ processing layer.

3. The method according to claim 1 or 2, wherein inputting (S4) the initial activation input value of the $i^{th}$ processing layer into the activation function comprises:

    determining (204) a modulus length corresponding to the initial activation input value;
    generating (205) a first output value according to the modulus length corresponding to the initial activation input value and a first activation threshold;
    generating (206) a second output value according to the first output value and a second activation threshold, wherein the second activation threshold is greater than the first activation threshold; and
    generating (207) the initial activation output value according to the second output value and the modulus length corresponding to the initial activation input value.

4. The method according to claim 3, wherein generating (205) the first output value according to the modulus length corresponding to the initial activation input value and the first activation threshold comprises:

    calculating a difference between the modulus length corresponding to the initial activation input value and the first activation threshold and determining a product of the difference and a preset slope as the first output value, when the modulus length corresponding to the initial activation input value is greater than the first activation threshold, wherein the preset slope is a reciprocal of a difference between 1 and the first activation threshold; and determining the first output value as zero when the modulus length corresponding to the initial activation input value is less than the first activation threshold.

5. The method according to claim 3, wherein generating (206) the second output value according to the first output value and the second activation threshold comprises:

determining the second activation threshold as the second output value when the first output value is greater than the second activation threshold; and
determining the first output value as the second output value when the first output value is less than the second activation threshold.

6. The method according to claim 3, wherein the initial activation output value is generated by the following formula:

$$h = g * \frac{d}{\|d\|},$$

where h is the initial activation output value, g is the second output value, d is the initial activation input value, and $\|d\|$ is the modulus length corresponding to the initial activation input value.

7. The method according to claim 3, wherein re-determining (S5) the initial activation input value, inputting the re-determined initial activation input value into the activation function, and repeating acts of re-determining and inputting for the preset number of times comprises:
updating (208) the initial weights according to the initial activation output value, and regenerating the initial activation input value of the $i^{th}$ processing layer according to the updated initial weights, and inputting the re-generated initial activation input value of the $i^{th}$ processing layer into the activation function to regenerate the initial activation output value of the $i^{th}$ processing layer, wherein the acts of updating, regenerating and inputting are repeated for the preset number of times, and the latest initial activation output value of the $i^{th}$ processing layer is determined as the activation output value of the $i^{th}$ processing layer.

8. A processing apparatus (500) of a neural network model, wherein the neural network model comprises N processing layers, N is a positive integer, and the apparatus comprises:

an obtaining module (510), configured to obtain input data of the $i^{th}$ processing layer and convert the input data into a plurality of capsule nodes, wherein the input data comprises a plurality of neuron vectors in j dimensions, and i and j are positive integers less than or equal to N;
a first generating module (520), configured to perform affine transformation on the plurality of the capsule nodes to generate a plurality of affine nodes corresponding to the plurality of the capsule nodes;
a determining module (530), configured to determine an initial activation input value of the $i^{th}$ processing layer according to the plurality of the affine nodes corresponding to the plurality of the capsule nodes;
a second generating module (540), configured to input the initial activation input value of the $i^{th}$ processing layer into an activation function to generate an initial activation output value of the $i^{th}$ processing layer; and
a third generating module (550), configured to re-determine the initial activation input value of the $i^{th}$ processing layer according to an affine node corresponding to the initial activation output value, and input the re-determined initial activation input value of the $i^{th}$ processing layer into the activation function to regenerate the initial activation output value of the $i^{th}$ processing layer, wherein the third generating module is configured to repeatedly perform its functionalities for a preset number of times, and determine the latest initial activation output value of the $i^{th}$ processing layer as an activation output value of the $i^{th}$ processing layer.

9. The apparatus (500) according to claim 8, wherein the determining module (530) comprises:
a first generating unit, configured to perform a weighted summation on the plurality of the affine nodes corresponding to the plurality of the capsule nodes according to initial weights to generate the initial activation input value of the $i^{th}$ processing layer.

10. The apparatus (500) according to claim 8 or 9, wherein the second generating module (540) comprises:

a first determining unit, configured to determine a modulus length corresponding to the initial activation input value;

a second generating unit, configured to generate a first output value according to the modulus length corresponding to the initial activation input value and a first activation threshold;

a third generating unit, configured to generate a second output value according to the first output value and a second activation threshold, wherein the second activation threshold is greater than the first activation threshold; and

a fourth generating unit, configured to generate the initial activation output value according to the second output value and the modulus length corresponding to an affine node of a target capsule node.

11. The apparatus (500) according to claim 10, wherein the second generating unit is further configured to:

calculate a difference between the modulus length corresponding to the initial activation input value and the first activation threshold and determine a product of the difference and a preset slope as the first output value, when the modulus length corresponding to the initial activation input value is greater than the first activation threshold, wherein the preset slope is a reciprocal of a difference between 1 and the first activation threshold; and determine the first output value as zero when the modulus length corresponding to the initial activation input value is less than the first activation threshold.

12. The apparatus (500) according to claim 10, wherein the third generating unit is further configured to:

determine the second activation threshold as the second output value when the first output value is greater than the second activation threshold; and

determine the first output value as the second output value when the first output value is less than the second activation threshold.

13. An electronic device, comprising:

at least one processor; and

a memory communicatively connected to the at least one processor; wherein,

the memory stores instructions executable by the at least one processor, and when the instructions are executed by the at least one processor, the at least one processor is caused to implement the method according to any one of claims 1-7.

14. A non-transitory computer-readable storage medium storing computer instructions, wherein the computer instructions are used to cause a computer to implement the method according to any one of claims 1-7.

15. A computer program product comprising computer instructions, wherein the computer instructions are used to cause a computer to implement the method according to any one of claims 1-7.

obtaining input data of the ith processing layer and converting the
input data into a plurality of capsule nodes — S1

performing affine transformation on the plurality of the capsule
nodes to generate a plurality of affine nodes corresponding to the
plurality of the capsule nodes — S2

determining an initial activation input value of the ith processing
layer according to the plurality of the affine nodes corresponding
to the plurality of the capsule nodes — S3

inputting the initial activation input value of the ith processing
layer into an activation function to generate an initial activation
output value of the ith processing layer — S4

re-determining the initial activation input value of the ith
processing layer according to an affine node corresponding to the
initial activation output value, and inputting the re-determined
initial activation input value of the ith processing layer into the
activation function to regenerate the initial activation output
value of the ith processing layer, wherein the above acts are
repeated for a preset number of times, and the latest initial
activation output value of the ith processing layer is determined as
an activation output value of the ith processing layer — S5

FIG. 1

obtaining input data of the ith processing layer and converting the input data into a plurality of capsule nodes ⌐201

performing affine transformation on the plurality of the capsule nodes to generate a plurality of affine nodes corresponding to the plurality of the capsule nodes ⌐202

determining an initial activation input value of the ith processing layer according to the plurality of the affine nodes corresponding to the plurality of the capsule nodes ⌐203

determining a modulus length corresponding to the initial activation input value ⌐204

generating a first output value according to the modulus length corresponding to the initial activation input value and a first activation threshold ⌐205

generating a second output value according to the first output value and a second activation threshold ⌐206

generating the initial activation output value according to the second output value and the modulus length corresponding to the initial activation input value ⌐207

updating the initial weights according to the initial activation output value, and regenerating the initial activation input value of the ith processing layer according to the updated initial weights, and inputting the re-generated initial activation input value of the ith processing layer into the activation function to regenerate the initial activation output value of the ith processing layer, wherein the acts of updating, regenerating and inputting are repeated for the preset number of times, and the latest initial activation output value of the ith processing layer is determined as the activation output value of the ith processing layer ⌐208

FIG. 2

FIG. 3

FIG. 4

processing apparatus 500
of a neural network
model

obtaining module 510

first generating
module 520

determining module
530

second generating
module 540

third generating
module 550

FIG. 5

Bus

memory 602

Input device 603

processor 601

Output
device 604

FIG. 6

Europäisches
Patentamt

European
Patent Office

Office européen
des brevets

# EUROPEAN SEARCH REPORT

Application Number

EP 20 21 7352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIANG REN ET AL: "Adaptive Routing Between Capsules", ARXIV.ORG, CORNELL UNIVERSITY LIBRARY, 201 OLIN LIBRARY CORNELL UNIVERSITY ITHACA, NY 14853, 19 November 2019 (2019-11-19), XP081535227, sections 1, 2, 3.1, 3.2; * abstract * | 1-15 | INV. G06N3/04 G06N3/08 |
| X | SARA SABOUR ET AL: "Dynamic Routing Between Capsules", ARXIV.ORG, CORNELL UNIVERSITY LIBRARY, 201 OLIN LIBRARY CORNELL UNIVERSITY ITHACA, NY 14853, 26 October 2017 (2017-10-26), XP081283827, Sections 1-2; * abstract * | 1-15 | |
| X | WO 2019/083553 A1 (GOOGLE LLC [US]) 2 May 2019 (2019-05-02) * paragraph [0069] - paragraph [0085]; figure 3A * * paragraph [0040] - paragraph [0041] * * figure 1B * | 1-15 | TECHNICAL FIELDS SEARCHED (IPC) G06N |
| A | CN 110 046 249 A (SHENZHEN INST OF ADV TECH CAS) 23 July 2019 (2019-07-23) * paragraph [0005] - paragraph [0014] * * figure 2 * | 1-15 | |

The present search report has been drawn up for all claims

| Place of search | Date of completion of the search | Examiner |
|---|---|---|
| Munich | 28 September 2021 | Baudino, A |

EPO FORM 1503 03.82 (P04C01)

## ANNEX TO THE EUROPEAN SEARCH REPORT
## ON EUROPEAN PATENT APPLICATION NO.

EP 20 21 7352

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2021

| Patent document cited in search report | | Publication date | Patent family member(s) | | Publication date |
|---|---|---|---|---|---|
| WO 2019083553 | A1 | 02-05-2019 | CN | 111279362 A | 12-06-2020 |
| | | | EP | 3685316 A1 | 29-07-2020 |
| | | | JP | 6901633 B2 | 14-07-2021 |
| | | | JP | 2021501392 A | 14-01-2021 |
| | | | US | 2020285934 A1 | 10-09-2020 |
| | | | WO | 2019083553 A1 | 02-05-2019 |
| CN 110046249 | A | 23-07-2019 | NONE | | |

EPO FORM P0459

For more details about this annex : see Official Journal of the European Patent Office, No. 12/82